# EUROPEAN PATENT APPLICATION

(11) **EP 1 638 103 A1**
(43) Date of publication of application: **22.03.2006**
(21) Application number: 05255720.4
(22) Date of filing: 15.09.2005
(51) Int. Cl.: G11B 27/034, G11B 27/00, G11B 20/10

(54) **Combination recording apparatus to automatically set relay recording and method thereof**

(30) Priority: 20.09.2004 KR 2004075005
(71) Applicant: Samsung Electronics Co., Ltd., Suwon-si, Gyeonggi-Do (KR)
(72) Inventor: Kim, Jin-hwi, Gweonseon-gu Suwon-Si Gyeonggi-do (KR)
(74) Representative: Robinson, Ian Michael

(57) **Abstract**

A combination recording apparatus, and a method of controlling the combination recording apparatus, combining a first recording apparatus (200) to record an input video on a first recording medium and a second recording apparatus (100) to record the input video on a second recording medium, the combination recording apparatus including a calculator to calculate a recordable time of the first recording medium, wherein the combination recording apparatus records a portion of the input video on the first recording medium according to the recordable time, and records a remainder of the input video on the second recording apparatus (100).

## Description

The present invention relates to a recording apparatus, and, more specifically, to a recording apparatus to record an input video on a recording medium.

A recording apparatus records an input video on a recording medium. A typical example of the recording apparatus is a video cassette recorder (VCR).

Most VCRs coming to the market are equipped with a record function which operates according to a one-touch recording (OTR) feature. The OTR feature facilitates the recording for a recording time specified by a user. When the recording time is not specified, the recording is continued.

The OTR feature allows a user to set a recording time, or a continuous recording, by use of a recording button alone, which is provided to the VCR. While the VCR is stopped, the selection of the recording button sets the continuous recording. One more selection of the recording button sets 30-minute recording (hereinafter, referred to as a 0:30 recording). Further selection of the recording button sets 1:00 recording. Subsequently, following selections of the recording button recursively set 1:30 recording → 2:00 recording → 2:30 recording → ··· → 6:00 recording → continuous recording → 0: 30 recording → ···, and so forth.

As the OTR feature facilitates the selection of the desired recording time or the continuous recording by means of the single recording button, the user can experience great convenience for the recording.

To execute the recording for the recording time fixed by the user, there should be an unoccupied recording area corresponding to the fixed recording time on a recording medium such as a VCR tape. Otherwise, the entire input video may be not recorded for the fixed recording time. Such a situation can be an obstacle to the user who wants to record the entirety of his/her desired video.

To record the entire video, the user has to replace the recording medium with a new one for the recording. However, this causes inconvenience to the user, and attenuates the OTR feature.

The present invention has been provided to solve the above-mentioned and/or other problems and disadvantages occurring in the conventional arrangement.

Additional aims and/or advantages of the invention will be set forth in part in the description which follows and, in part, will be apparent from the description, or may be learned by practice of the invention.

According to the present invention there is provided an apparatus and method as set forth in the appended claims. Preferred features of the invention will be apparent from the dependent claims, and the description which follows.

An aspect of the present invention provides a combination recording apparatus, in which two or more recording apparatuses are combined, to automatically set a relay recording such that, when a fixed recording time exceeds a recordable time of a first recording medium loaded in one recording apparatus, the input video corresponding to the exceeding time is recorded on a second recording medium provided in a second recording apparatus, and a method to automatically set the relay recording.

In a first aspect of the present invention, there is provided a combination recording apparatus, which combines a first recording apparatus to record an input video on a first recording medium and a second recording apparatus to record the input video on a second recording medium, comprises a first calculator provided in the first recording apparatus to calculate a first recordable time which is a recordable time of the first recording medium; a manipulator to set a recording time; and a controller to control the combination recording apparatus to record the input video on the first recording medium for the first recordable time, and to record an exceeding time of the input video on the second recording medium, in response to the recording time exceeding the first recordable time.

The combination recording apparatus may further comprise an on-screen display (OSD) processor that OSD-processes information. The controller may control the OSD processor to OSD-process information indicating that the input video is recorded on the first recording medium for the first recordable time, and on the second recording medium for the exceeding time.

The manipulator, the controller, and the OSD processor may be included in one of the first recording apparatus and the second recording apparatus.

The combination recording apparatus may further comprise a second calculator provided in the second recording apparatus to calculate a second recordable time which is a recordable time of the second recording medium. The controller may control the combination recording apparatus to record the input video for an unspecified time in response to the recording time exceeding a sum of the first recordable time and the second recordable time.

The combination recording apparatus may further comprise an OSD processor to OSD-process information indicating the recording of the input video for the unspecified recording time in response to the recording time exceeding the sum of the first recordable time and the second recordable time.

The first calculator may calculate the first recordable time based on a recording area of the first recording medium and a predetermined recording speed of the first recording medium, and the second calculator may calculate the second recordable time based on a recording area of the second recording medium and a predetermined recording speed of the second recording medium.

The recording time may be set according to a one-touch record (OTR) feature.

The second recording apparatus may be idling while the first recording apparatus is operating.

Each of first recording apparatus and the second recording apparatus may be respectively one of an optical recorder, a magnetic recorder, a semiconductor recorder, a compact disk recorder (CDR), a digital video disk recorder (DVDR), a hard disk drive (HDD) recorder, a video cassette recorder (VCR), and a memory card recorder.

In a second aspect of the present invention, there is provided a method to automatically set a relay recording of a combination recording apparatus, which combines a first recording apparatus to record an input video on a first recording medium and a second recording apparatus to record the input video on a second recording medium, comprises calculating a first recordable time which is a recordable time of the first recording medium; setting a recording time; and recording the input video on the first recording medium for the first recordable time, and recording an exceeding time of the input video on the second recording medium, in response to the recording time exceeding the first recordable time

The recording the input video on the first recording medium and the second recording medium may further comprise on-screen display (OSD) processing information indicating that the input video is recorded on the first recording medium for the first recordable time, and on the second recording medium for the exceeding time.

The method may further comprise calculating a second recordable time which is a recordable time of the second recording medium; and recording the input video for an unspecified recording time in response to the recording time exceeding a sum of the first recordable time and the second recordable time.

The recording the input video for the unspecified time may further comprise OSDprocessing information indicating the recording of the input video for the unspecified recording time in response to the recording time exceeding the sum of the first recordable time and the second recordable time.

In a further aspect of the present invention, there is provided a combination recording apparatus that combines a first recording apparatus to record an input video on a first recording medium and a second recording apparatus to record the input video on a second recording medium, and the combination recording apparatus comprises a calculator to calculate a recordable time of the first recording medium, wherein the combination recording apparatus records a portion of the input video on the first recording medium according to the recordable time, and records a remainder of the input video on the second recording apparatus.

In a further aspect of the present invention, there is provided a combination recording apparatus combines two or more recording apparatuses which record input video on two or more corresponding recording media, and the apparatus comprises a controller to control the apparatus to record a portion of the input video on a first recording medium according to a recordable time of the first recording medium, and to record a remainder of the input video on a second recording medium.

In a further aspect of the present invention, there is provided a method of automatically setting a relay recording of a combination recording apparatus which combines a first recording apparatus to record an input video on a first recording medium and a second recording apparatus to record the input video on a second recording medium, the method comprising calculating a recordable time of the first recording medium, and recording a portion of the input video on the first recording medium according to the recordable time, and recording a remainder of the input video on the second recording apparatus.

In a further aspect of the present invention, there is provided a method of automatically setting a relay recording of a combination recording apparatus which combines two or more recording apparatuses which record input video on two or more corresponding recording media, the method comprising recording a portion of the input video on a first recording medium according to a recordable time of the first recording medium; and recording a remainder of the input video on a second recording medium.

For a better understanding of the invention, and to show how embodiments of the same may be carried into effect, reference will now be made, by way of example, to the accompanying diagrammatic drawings in which:
Figure 1 is a block diagram of a digital video disk recorder (DVDR) and video cassette recorder (VCR) combination apparatus which automatically sets a relay recording according to an embodiment of the present invention;
Figure 2 is a flowchart of operations to automatically set the relay recording in the DVDR/VCR combination apparatus in an embodiment of the present invention; and
Figures 3A through 3G illustrate TV screens displaying OSD-processed information according to an embodiment of the present invention.

Reference will now be made in detail to the embodiments of the present invention, examples of which are illustrated in the accompanying drawings, wherein like reference numerals refer to the like elements throughout. The embodiments are described below to explain the present invention by referring to the figures.

In the following description, some drawing reference numerals may be repeated in different drawings when illustrating elements described in the discussion of a previous drawing. The matters defined in the description, such as detailed construction and element descriptions, are merely provided to assist in a comprehensive understanding of the invention. Also, well known functions or constructions may not be described in detail in order to not obscure the invention in unnecessary detail.

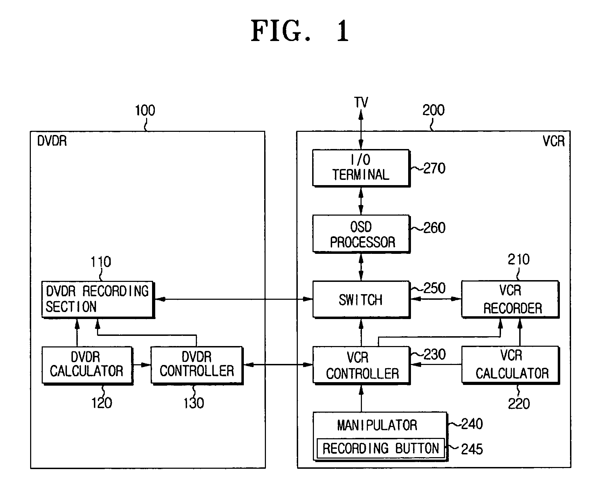

Figure 1 is a block diagram of a digital video disk recorder (DVDR) and video cassette recorder (VCR) combination apparatus which automatically sets a relay recording according to an embodiment of the present invention. A combination recording apparatus such as this, which is but one possible combination apparatus among many diverse options, combines two or more recording apparatuses. The DVDR/VCR combination apparatus combines functions of a DVDR 100 and a VCR 200.

The DVDR 100 records an input video on a recording medium such as a DVD (not shown). The DVDR 100 includes a DVDR recording section 110, a DVDR calculator 120, and a DVDR controller 130.

The DVDR recording section 110 writes, on the supplied DVD, the input video provided from a switch 250 which will be described subsequently in the description of the VCR 200.

The DVDR calculator 120 calculates a recordable time of the DVD (hereinafter, referred to as a DVD recordable time) provided in the DVDR recording section 110. The recordable time is a time period converted from the length of the input video recordable on the DVD. The DVDR calculator 120 calculates the DVD recordable time based on a recordable area on the DVD and a predetermined recording speed. Accordingly, if the recording speed varies with the fixed recordable area, the DVD recordable time calculated at the DVDR calculator 120 also changes. Alternatively, the DVDR controller 130, which will be described subsequently in this description, may calculate the recordable time. In this case, the DVDR calculator 120 can be omitted.

The DVDR controller 130 controls the recording operation of the DVDR recording section 110. The DVDR controller 130 is able to communicate data with a VCR controller 230, which will be subsequently described in this description. Hence, the DVDR controller 130 can transfer information relating to the DVD recordable time obtained by the DVDR calculator 120 to the VCR controller 230, and receive a control command from the VCR controller 230.

The VCR 200 records the input video on a VCR tape. The VCR 200 includes a VCR recorder 210, a VCR calculator 220, a VCR controller 230, a manipulator 240, a switch 250, an on-screen display (OSD) processor 260, and an input and output (I/O) terminal 270.

The VCR recorder 210 records the input video received from the switch 250 to a supplied VCR tape.

The VCR calculator 220 calculates a recordable time of the VCR tape (hereinafter, referred to as a VCR tape recordable time) loaded in the VCR recorder 210. The VCR calculator 220 calculates the VCR tape recordable time based on a recordable area on the VCR tape and a predetermined recording speed. Alternatively, the VCR controller 230 may carry out the calculation of the VCR calculator 220. In this case, the VCR calculator 220 can be omitted.

The switch 250 switches to supply the input video, which is received from an external apparatus such as a cable source, satellite dish receiver, TV (as shown in this embodiment), etc., to the DVDR recording section 110 or the VCR recorder 210. The switch 250 switches under the control of the VCR controller 230.

The OSD processor 260 creates and OSD-processes text information to be displayed on a display such as a TV screen. An external apparatus such as a TV is connected to the I/O terminal 270.

The manipulator 240 is a user interface to forward a manipulation command from a user to the VCR controller 230, which will be described subsequently in this description. The manipulator 240 may be realized by a manipulation panel provided at the front part of the DVDR/VCR combination apparatus, and/or a remote controller operable at a distance.

The manipulator 240 is used to specify a user's desired recording time. A recording button 245 provided on the manipulator 240 is utilized to set the desired recording time, or a continuous recording, according to the OTR feature.

The VCR controller 230 controls the recording by the VCR recorder 210, the switching by the switch 250, and the OSD processing by the OSD processor 260. The VCR controller 230 is able to communicate data with the DVDR controller 130. Thus, the VCR controller 230 can receive information relating to the DVD recordable time from the DVDR controller 130, and transfer a control command to the DVDR controller 130.

The VCR controller 230 functions to automatically set a relay recording. According to the relay recording, when the recording time set through the manipulator 240 exceeds the DVD or VCR recordable time, the input video is recorded on the VCR tape or the DVD for the exceeding time. More specifically, for example, when the DVDR/VCR combination apparatus is set to a DVDR record mode in which the DVDR 100 records the input video, the input video is recorded first on the DVD, and then any remainder is recorded on the VCR tape. By contrast, when the DVDR/VCR combination apparatus is set to a VCR record mode in which the VCR 200 records the input video, the input video is recorded first on the VCR tape, and then any remainder is recorded on the DVD.

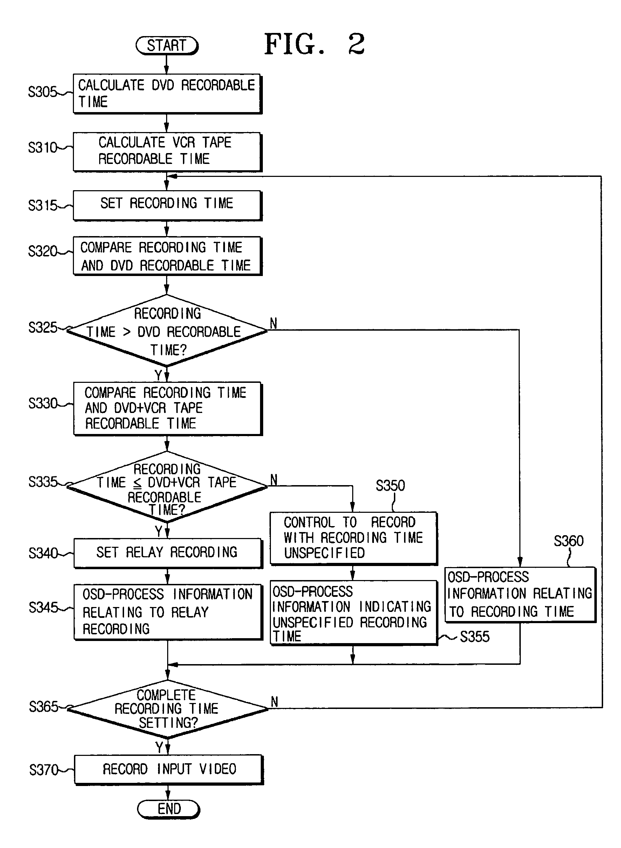

An automatic setting of the relay recording by the VCR controller 230 will now be described in reference to Figure 2. In this embodiment, the DVDR/VCR combination apparatus is in the DVDR record mode. Figure 2 is a flowchart explaining the automatic setting of the relay recording at the DVDR/VCR combination apparatus according to this embodiment of the present invention.

The DVDR calculator 120 calculates the DVD recordable time (S305). The calculated DVD recordable time is supplied to the VCR controller 230 via the DVDR controller 130.

The VCR calculator 220 calculates the VCR tape recordable time (S310) . The calculated VCR tape recordable time is supplied to the VCR controller 230.

The user specifies a desired recording time according to the ORT feature by use of the recording button 245 at the manipulator 240 (S315) . The specified recording time is provided to the VCR controller 230.

The VCR controller 230 compares the recording time and the DVD recordable time (S320). If the recording time exceeds the DVD recordable time (S325), the VCR controller 230 compares the recording time with the sum of the DVD recordable time and the VCR tape recordable time (hereinafter, referred to a DVD+VCR tape recordable time) (S330) .

If the recording time is below the DVD+VCR tape recordable time (S335), the VCR controller 230 sets the relay recording (S340). In more detail, the VCR controller 230 controls the DVDR/VCR combination apparatus to record the input video on the DVD for the DVD recordable time, and on the VCR tape for the exceeding time (recording time - DVD recordable time).

The VCR controller 230 controls the OSD processor 260 to OSD-process information relating to the relay recording set at operation S340, that is, to record the input video on the DVD for the DVD recordable time and on the VCR tape for the exceeding time (S345). The OSD-processed information is displayed on the TV screen. Thus, the user is notified that the DVDR/VCR combination apparatus is not allowed to record the entire input video on the DVD for the recording time specified at operation S315, and that it is possible only to record the input video divided on the DVD and the VCR tape. Also, the user can be notified of the DVD recordable time.

If it is determined that the recording time exceeds the DVD+VCR tape recordable time at operation S335, the VCR controller 230 processes to record the input video with the recording time unspecified, that is, to set a continuous recording (S350). This is because it is impossible to record the input video, even if divided on the available DVD and the VCR tape, for the recording time set at operation S315.

The VCR controller 230 controls the OSD processor 260 to OSD-process information indicating the unspecified recording time, that is, the continuous recording (S355). The OSDprocessed information is displayed on the TV screen. Accordingly, the user is notified that it is impossible to record the input video by dividing it on the DVD and the VCR tape for the recording time set at operation S315. The user may also be notified of the DVD+VCR tape recordable time.

If it is determined that the recording time is below the DVD recordable time (S325), the VCR controller 230 does not enter the relay recording, and controls the OSD processor 260 to OSD-process the information relating to the specified recording time (S360).

Next, when the setting of the recording time is completed (S365), the VCR controller 230 controls the DVDR/VCR combination apparatus to record the input video according to one of the recording time set at operation S315, the relay recording set at operation S340, and the unspecified recording time at operation S350 (S370) . The completion of the recording time setting can be determined when the recording button 245 at the manipulator 240 is not pressed within a predetermined time.

Therefore, when recording the input video for the recording time set at operation S315 (S370), the DVDR controller 130, upon receiving the information relating to the recording time from the VCR controller 230, controls the DVDR recording section 110 to record the input video for the recording time. As for the relay recording (S370), the DVDR controller 130, upon receiving the information relating to the DVD recordable time from the VCR controller 230, controls the DVDR recording section 110 to record the input video for the DVD recordable time, and then the VCR controller 230 controls the VCR recorder 210 to record the input video for the exceeding time. As for the recording for the unspecified recording time (S370), the DVDR controller 130, upon receiving the continuous recording command from the VCR controller 230, controls the DVDR recording section 110 to continuously record the input video.

Meanwhile, when it is determined that the recording time setting is not finished (S365), operations S315 through S360 are repeated. The determination that the recording time setting is not complete can be made when the recording button 245 at the manipulator is pressed within the predetermined time.

It has been illustrated how to automatically set the relay recording at the DVDR/VCR combination apparatus, given that the DVDR/VCR combination apparatus is in the DVDR record mode. In the event that the DVDR/VCR combination apparatus is in the VCR record mode, the recording operation will be similar to the DVDR record mode. The primary difference lies in that the input video is recorded first on the VCR tape and then on the DVD according to the relay recording. Thus, the detailed description on the VCR record mode is omitted for brevity.

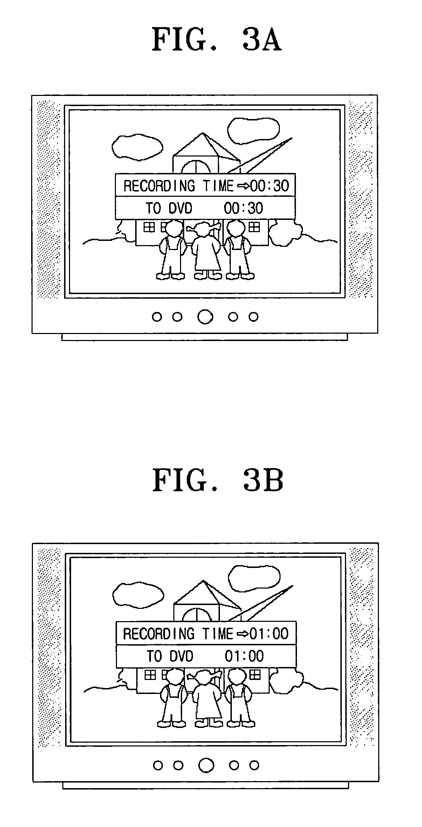

The following description further illustrates, in relation to Figure 3A through Figure 3G, the method to automatically set the relay recoding at the DVDR/VCR combination apparatus.

Suppose that the DVD recordable time 1:30 is calculated at operation S305, and the VCR tape recordable time 1:00 is calculated at operation S310. Figures 3A through 3G show the OSD-processed information (hereinafter, referred to as OSD information) is displayed in order on the TV screen when the user sets the recording time in sequence by use of the recording button 245 according to the OTR feature.

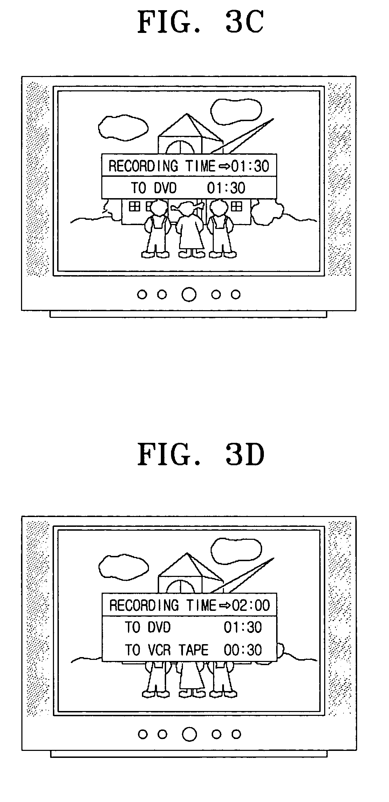

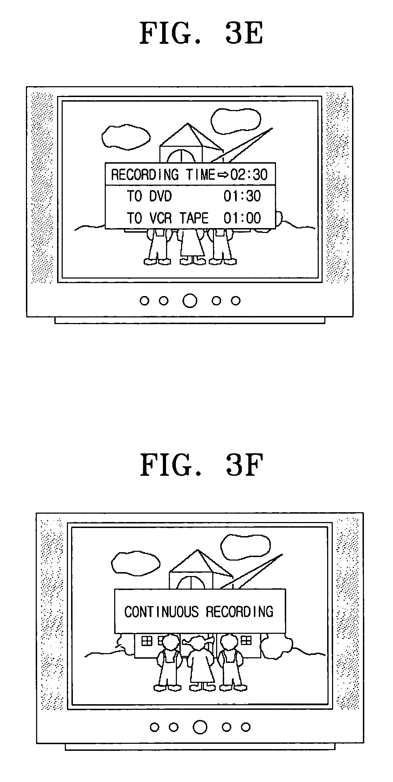

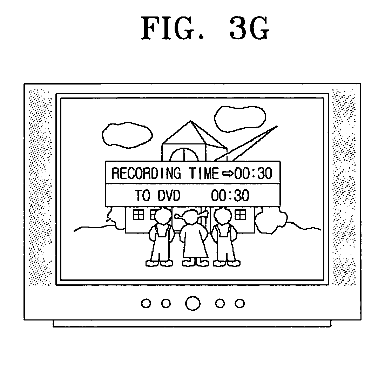

Referring to Figures 3A through 3G, the OSD information displayed on the TV screen is changed from 'recording time ⇒ 0:30 / to DVD 0:30' (Figure 3A) → 'recording time ⇒ 1:00 / to DVD 1:00' (Figure 3B) → 'recording time ⇒ 1:30 / to DVD 1:30' (Figure 3C) → 'recording time ⇒ 2:00 / to DVD 1:30 / to VCR tape 0:30' (Figure 3D) → 'recording time ⇒ 2:30 / to DVD 1:30 / to VCR tape 1:00' (Figure 3E) → 'continuous recording' (Figure 3F) → 'recording time ⇒ 0:30 / to DVD 0:30' (Figure 3G).

As desired by the user, the OSD information 'recording time ⇒ 2:00 / to DVD 2:00' would ideally be displayed on the TV screen of Figure 3D. Instead, the OSD information 'recording time ⇒ 2:00 / to DVD 1:30 / to VCR tape 0:30' is displayed because it is determined that the recording time 2:00 exceeds the DVD recordable time 1:30 at operation S325 in Figure 2. Thus, the VCR controller 230 sets the relay recording, that is, controls the DVDR/VCR combination apparatus to record the input video on the DVD for the DVD recordable time 1:30, and on the VCR tape for the exceeding time 0:30, at operation S340 in Figure 2. The VCR controller 230 controls the OSD processor 260 to OSD-process the information relating to the relay recording at operation S345 in Figure 2.

The OSD information displayed on the TV screen as shown in Figure 3F would ideally be 'recording time ⇒ 3:00 / to DVD 1:30 / to VCR tape 1:30'. Instead, the OSD information 'continuous recording' is displayed because it is determined that the recording time 3:00 exceeds the DVD+VCR tape recordable time 2:30 (S335 in Figure 2). Accordingly, the VCR controller 230 controls the DVDR/VCR combination apparatus to record the input video with the recording time unspecified, that is, to enter the continuous recording (S350 in Figure 2), and controls the OSD processor 260 to OSD-process the information relating to the continuous recording (S355 in Figure 2).

It has been described, in relation to these embodiments, that the DVDR/VCR combination apparatus automatically sets the relay recoding for the understanding of the present invention. It should be appreciated that recording apparatuses combined in the combination recording apparatus are not limited to these embodiments. The combination recording apparatus may selectively combine a recorder using an optical recording medium, a recorder using a magnetic recording medium, and a recorder using a semiconductor recording medium.

Optical recorders may include, for example, a compact disk recorder (CDR) and a DVDR. Magnetic recorder may include, for example, a hard disk drive (HDD) recorder and a VCR. And an example of a semiconductor recording apparatus may include a memory card recorder.

Note that the combination recording apparatus may combine the same type of recording apparatuses. That is, the recording apparatus combining two DVDRs can be adopted to the present invention.

The number of the recording apparatuses combined in the combination recording apparatus is not limited. That is, more than three recording apparatuses can be combined in the combination recording apparatus according to an embodiment of the present invention. For instance, if a DVDR, a VCR, and a HDD recorder are combined together, the combination recording apparatus capable of automatically setting the relay recording by use of the three recorders can realize the inventive aspects of the present invention.

In addition, the present invention can employ any external apparatus, capable of outputting a video, to provide the input video to the combination recording apparatus. For instance, the external device may include a TV, a set-top box, a digital camcorder, and a digital camera.

In light of the foregoing as illustrated above, when a recording time specified by the user exceeds the recordable time of a recording medium supplied in one of the recording apparatuses, it is automatically set to record the exceeding time of the input video on a recording medium of another recording apparatus. As a result, even when the specified recording time exceeds the recordable time of the recording medium, the user does not have to manually replace the recording medium with a new one during the recording.

Furthermore, the OSD information provided to the user indicates that it is impossible to recording the input video on a single recording medium for the recording time set by the user, and that the recording of the input video should be divided onto two or more recording media. The user can obtain the recordable times of the two or more recording media.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A combination recording apparatus which combines a first recording apparatus (200) to record an input video on a first recording medium and a second recording apparatus (100) to record the input video on a second recording medium, the combination recording apparatus comprising:
a first calculator (220) provided in the first recording apparatus (200) to calculate a first recordable time which is a recordable time of the first recording medium;
a manipulator (240) to set a recording time; and
a controller (230) to control the combination recording apparatus to record the input video on the first recording medium for the first recordable time, and to record an exceeding time of the input video on the second recording medium, in response to the recording time exceeding the first recordable time.

2. The combination recording apparatus of claim 1, further comprising an on-screen display (OSD) processor (260) that OSD-processes information;
wherein the controller (230) controls the OSD processor (260) to OSD-process information indicating that the input video is recorded on the first recording medium for the first recordable time, and on the second recording medium for the exceeding time.

3. The combination recording apparatus of claim 2, wherein the manipulator (240), the controller (230), and the OSD processor (260) are included in one of the first recording apparatus (200) and the second recording apparatus (100).

4. The combination recording apparatus of claim 1, 2 or 3, further comprising a second calculator (120) provided in the second recording apparatus (100) to calculate a second recordable time which is a recordable time of the second recording medium;
wherein the controller (230) controls the combination recording apparatus to record the input video for an unspecified recording time in response to the recording time exceeding a sum of the first recordable time and the second recordable time.

5. The combination recording apparatus of claim 4, further comprising an OSD processor (260) that OSD-processes information;
wherein the controller (230) controls the OSD processor (260) to OSD-process information indicating the recording of the input video for the unspecified recording time in response to the recording time exceeding the sum of the first recordable time and the second recordable time.

6. The combination recording apparatus of claim 4 or 5, wherein the first calculator (220) calculates the first recordable time based on a recording area of the first recording medium and a predetermined recording speed of the first recording medium, and the second calculator (120) calculates the second recordable time based on a recording area of the second recording medium and a predetermined recording speed of the second recording medium.

7. The combination recording apparatus of any of claims 1 to 6, wherein the recording time is set according to a one-touch record (OTR) feature.

8. The combination recording apparatus of any preceding claim, wherein the second recording apparatus (100) is idling while the first recording apparatus (200) is operating.

9. The combination recording apparatus of any preceding claim, wherein each of the first recording apparatus (200) and the second recording apparatus (100) is respectively one of an optical recorder, a magnetic recorder, a semiconductor recorder, a compact disk recorder (CDR), a digital video disk recorder (DVDR), a hard disk drive (HDD) recorder, a video cassette recorder (VCR), and a memory card recorder.

10. A method to automatically set a relay recording of a combination recording apparatus which combines a first recording apparatus to record an input video on a first recording medium and a second recording apparatus to record the input video on a second recording medium, the method comprising:
calculating (S310) a first recordable time which is a recordable time of the first recording medium;
setting a recording time (S315); and
recording (S340) the input video on the first recording medium for the first recordable time, and recording an exceeding time of the input video on the second recording medium, in response to the recording time exceeding the first recordable time.

11. The method of claim 10, wherein the recording the input video on the first recording medium and the second recording medium further comprises on-screen display (OSD) processing (S345) information indicating that the input video is recorded on the first recording medium for the first recordable time, and on the second recording medium for the exceeding time.

12. The method of claim 10 or 11, further comprising:
calculating (S303) a second recordable time which is a recordable time of the second recording medium; and
recording (S350) the input video for an unspecified recording time in response to the recording time exceeding a sum of the first recordable time and the second recordable time.

13. The method of claim 12, wherein the recording the input video for the unspecified recording time comprises OSD-processing (S355) information indicating the recording of the input video for the unspecified recording time in response to the recording time exceeding the sum of the first recordable time and the second recordable time.

14. The method of claim 12 or 13, wherein the first recordable time is calculated based on a recording area of the first recording medium and a predetermined recording speed of the first recording medium, and the second recordable time is calculated based on a recording area of the second recording medium and a predetermined recording speed of the second recording medium.

15. The method of any of claims 10 to 14, wherein the recording time is set according to a one-touch record (OTR) feature.

16. The method of any of claims 10 to 15, wherein the second recording apparatus is idling while the first recording apparatus is operating.

17. The method of any of claims 10 to 16, wherein each of the first recording apparatus and the second recording apparatus is respectively one of an optical recorder, a magnetic recorder, a semiconductor recorder, a compact disk recorder (CDR), a digital video disk recorder (DVDR), a hard disk drive (HDD) recorder, a video cassette recorder (VCR), and a memory card recorder.

18. A combination recording apparatus which combines a first recording apparatus (200) to record an input video on a first recording medium and a second recording apparatus (100) to record the input video on a second recording medium, the combination recording apparatus comprising:
a calculator (220) to calculate a recordable time of the first recording medium;
wherein the combination recording apparatus records a portion of the input video on the first recording medium according to the recordable time, and records a remainder of the input video on the second recording apparatus.

19. A combination recording apparatus which combines two or more recording apparatuses which record input video on two or more corresponding recording media, the apparatus comprising:
a controller (230) to control the apparatus to record a portion of the input video on a first recording medium according to a recordable time of the first recording medium, and to record a remainder of the input video on a second recording medium.

20. The apparatus of claim 19, further comprising a user interface (240) to receive information regarding a recording time of the input video.

21. The apparatus of claim 19 or 20, further comprising a user interface to display information regarding the portion of the input video being recorded on the first recording medium, and the remainder of the input video being recorded on the second recording medium.

22. The apparatus of claim 19, 20 or 21, further comprising a user interface to display information regarding an entirety of the input video not being recorded in response to a recording time of the input video being longer than a sum of the recordable time of the first recording medium and a recordable time of the second recording medium.

23. A method of automatically setting a relay recording of a combination recording apparatus which combines a first recording apparatus (200) to record an input video on a first recording medium and a second recording apparatus (100) to record the input video on a second recording medium, the method comprising:
calculating (S310) a recordable time of the first recording medium; and
recording (S340) a portion of the input video on the first recording medium according to the recordable time, and recording a remainder of the input video on the second recording apparatus.

24. A method of automatically setting a relay recording of a combination recording apparatus which combines two or more recording apparatuses which record input video on two or more corresponding recording media, the method comprising:
recording a portion of the input video on a first recording medium according to a recordable time of the first recording medium; and
recording a remainder of the input video on a second recording medium.

25. The method of claim 24, further comprising receiving information from a user regarding a recording time of the input video.

26. The method of claim 24 or 25, further comprising displaying information regarding the portion of the input video being recorded on the first recording medium, and the remainder of the input video being recorded on the second recording medium.

27. The method of claim 24, 25 or 26, further comprising displaying information regarding an entirety of the input video not being recorded in response to a recording time of the input video being longer than a sum of the recordable time of the first recording medium and a recordable time of the second recording medium.
